# EUROPEAN PATENT SPECIFICATION

(11) **EP 3 507 260 B1**
(45) Date of publication and mention of the grant of the patent: **11.08.2021**
(21) Application number: 17783696.2
(22) Date of filing: 01.09.2017
(51) Int. Cl.: C04B 28/02, C04B 28/10

(54) **THE METHOD OF STABILIZATION OF AMMONIA RESIDUES IN THE MIXTURE CONTAINING ENERGY BY-PRODUCTS USING TANNIN**
VERFAHREN ZUR STABILISIERUNG VON AMMONIAKRESTEN IN DER MISCHUNG MIT ENERGIENEBENPRODUKTE MITTELS TANNIN
PROCÉDÉ DE STABILISATION DE RÉSIDUS D'AMMONIAC DANS UN MÉLANGE CONTENANT DES SOUS-PRODUITS D'ÉNERGIE À L'AIDE DE TANIN

(30) Priority: 02.09.2016 CZ 20160534
(43) Date of publication of application: 10.07.2019
(73) Proprietor: Vysoké Uceni Technické V Brne, 601 90 Brno (CZ)
(72) Inventor: PTÁCEK, Petr, 634 00 Brno - Nový Liskovec (CZ); OPRAVIL, Tomás, 664 41 Popuvky (CZ); SOUKAL, Frantisek, 594 01 Velké Mezirící - Oslavice (CZ); GALVÁNKOVÁ, Lucie, 750 02 Prerov - Prerov l-Mesto (CZ); HANISKOVÁ, Denisa, 05401 Levoca (SK)
(74) Representative: Brinkmann & Partner
(86) International application number: PCT/CZ2017/000059
(87) International publication number: WO 2018/041279

(56) References cited:
- EP-A1- 0 438 776
- WO-A1-01/66486
- JP-A- H11 303 303
- J Bittner ET AL: "Removing Ammonia from Fly Ash", , 31 December 2001 (2001-12-31), XP055427580, Retrieved from the Internet: URL:http://www.flyash.info/2001/ammonia/15 gasior.pdf [retrieved on 2017-11-22]

## Description

### Technical Field

The subject of the invention is the method of stabilization of ammonia residues in the mixture of cement, quicklime or lime water or plasticizer for building materials or their mixture and energy by - products or the mixture of energy by - products using tannin and also the application of the mixture containing stabilized ammonia.

### Background Art

The energy by - products, particularly fly ash from electrostatic or mechanic separation of particles from flue-gasses of solid and ordinarily fine-ground fuels in coal combustion power plants contain ammonia residues due to the application of selective reduction (SRC), as well as selective non-catalytic reduction (SNCR) technology. These technologies decrease the emmisions of NOₓ by spraying ammonia, ammonia water solution, urea or cyanuric acid into the combustion proces. Applying SNRC, the conversion ranges within 50 to 60 %. Ammonia residues (so called ammonia slip) are formed, which further react to ammonium hydrogencarbonate, ammonium nitrate, ammonium sulphate or hydrogensulphate due to the reduction processes. These compounds are then the source of ammonia which liberates from coal combustion by - products to the environment. The rate of this process is strongly enhanced by basic conditions. That limits the utilization of such raw materials in the production of Portland blended, pozzolanic and composite cements, concretes, mortars and other building materials. Also the production of stabilized material is not possible. It causes environmental burden (NH₃ is a greenhouse gas, it has long-time toxic effect on water organisms). Also the workers can be exposed (NH₃ is toxic when inhaled, causes skin burns and eye injury) when using fly ash containing the reaction products of ammonia slip in building and energetic industry as well as in other branches, in which SCR or SNCR is used.

Fly ash is one of energy by - products. According to ČSN EN 1414227-4 standard, replacing CSN 72 2072-7 and CSN P 72 2081-12 standards there are classic siliceous fly ash, and calcareous fluidized ash. These materials are certified as raw materials for the production of cement (SCMs, supplementary cementitious materials [1]), and thus for the production of concretes, mortars, aerated concrete blocks etc. Other types of energy by - products are slag, power plant gypsum and so - called stabilized fly ash (CSN 73 6124-2) containing coal combustion side products and flue gas desulphurization side products, which is used as filling material for the recultivation of exhausted mines, for the formation of landscapes, dams and wasteponds, etc. Furthermore there is aggregate fly ash bound granular mixture (ČSN EN 14227-3, originally a part of CSN 73 6124-3: Stabilized fly ash) and fly ash bound ground (ČSN EN 14227-14, originally partially specified in ČSN 73 6125).

There are three mechanisms introduced in literature, which are applied in the combustion process when NOₓ is formed: nitrogen from fuel combines with oxygen from air (1), cracking of hydrocarbon chains followed by the recombination with atmospheric nitrogen, so-called Fenimor process (2) and thermaly activated reaction of atmospheric nitrogen with atmospheric oxygen, so - called thermic NOₓ (3). The rate, at which these three processes apply during the combustion, depends on the conditions, at which the combustion proceeds [3].

The methods of removal of nitrogen oxides (NOₓ, i.e.. NO and NO₂, where the concentration is usually of NO >> NO₂ [3]) from flue gas can be devided to primary actions (1), which reduce the formation of NOₓ by recirculation of flue gas, lowering the temperature or decreasing the fuel/air ratio, whereas the secondary actions (2) aim at removal of NOₓ from flue gas. Common technologies are selective catalytic reduction (SRC) and selective non-catalytic reduction (SNCR) [4,5].

The principle of the method of selective catalytic reduction lays in spraying flue gas with diluted ammonia solution (thermal DeNOₓ process) or with urea (NOₓOUT proces), where the reduction of nitrogen oxides proceeds at the temperature of 300 až 400 °C on the surface of oxidic catalyzer (the mixture of TiO₂, V₂O₅, WO₃, etc. and metal Mo, W, Fe, Co, Cu,...). The idealized course of proceeding reactions can be stoichiometricaly described in the following way [2]:

(1) 4 *NO*+4*NH*₃+*O*₂*→*4*N*₂+6*H*₂*O;*

(2) 2*NO*₂+4*NH*₃+*O*₂→3*N*₂+6*H*₂*O;*

(3) *NO*₂+*NO*₂+2*NH*₃→2*N₂*+3*H*₂*O.*

The main advantage of SRC is high efficiency (80 to 90 %), the technology itself lays high demands on maintenance and operating conditions though. CH₄, CO and H₂ are used for the reduction together with ammonia [4].

The method of selective non-catalytic reduction (SNCR) applies spraying of ammonia (thermal DeNOₓ invented by Exxon Research and Eng. Co. in 1972 [6] and patented in 1975 [7]), ammonia water solution, urea (NOₓOUT) or cyanuric acid (RAPENOₓ) at the temperature of 870 up to 1050 °C. The technology lays high demands on the accuracy of measurement of boiler temperature profile. The efficiency also depends on the amount of used material and on elapsed time [4]. A homogenous conversion of NOₓ to nitrogen and water proceeds, which can be described by the following reaction [2]:

(4) *CO*(*NH*₂)₂+2*NO*+1/2*O₂*→2*N₂*+*CO*₂+2*H₂O.*

The application of urea, which decomposes with increasing temperature to ammonia (NH₂CONH₂+H₂O→2NH₃+CO₂) is more favourable compared to toxic NH₃ due to easier storage and dosage. When the cyanuric acid is used, the process can be described as follows [2]:

*(5)* (*HNCO*)₃+7/2*NOₓ*→13/4*N₂* +2*CO₂*+3/2*H*₂*O*+*CO.*

The efficiency of SNCR is only 50 to 60 % and so called ammonia slip is formed, which can be characterized by the presence of ammonia residues in flue gas. The amount of ammonia slip depends on normalized stoichiometric ratio (NSR, which usualy ranges within 1 to 3), on temperature (so called temperature gap, which, among others, is influenced by the concentration of CO), on the type of used reagent and on other conditions of combustion process [2].

Other substances are formed from ammonia residues by subsequent reduction reactions, namely ammonium hydrogen carbonate, ammonium nitrate. Also ammonium sulphate and ammonium hydrogen sulphate are formed by the reaction with SO₃. The formation of ammonia salts can result in consequential technical problems, such as corrosion or sediments formation. These substances are also the source of ammonia when being deposited or utilized together with materials, in which they are contained, particularly in building industry, because in basic environment the rate of ammonia release is significantly increased, for example by the reactions [8]:

(6) *NH*₄*HSO*₄+*CaO*+*H*₂*O*→*CaSO*₄+2*H*₂*O*+*NH*₃(*g*);

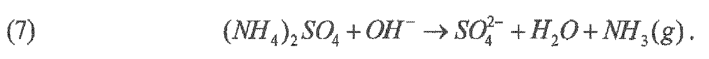

Total amount of ammonia in fly ash does not usually exceed 100 mg·kg⁻¹, but at certain circumstances it can be significantly higher [12].

The document WO 01/66486 A1 describes method for controlling ammonia gas emission and eliminating odorous emission from cementitious slurries using the pozzolanic admixture containing ammonia-laden ash. The invention relates to the addition of hypochlorites (OC1⁻) to dry fly ash at dosage levels, based on ammonia concentration in ash to eliminate or reduce ammonia gas evolution from the high pH cementitious slurries. The reagent is activated upon water addition and reacts with dissolved ammonia in the ash or concrete slurry to form primarily monochloramine and other soluble chloride salts. However, at high pH nitrogen from the fly ash can in this case be released as NOx. Additionally, an overdose of hypochlorite agent would further oxidize monochloramine to form nitrogen gas (NH₂) and chlorides. Products like monochloramine and chloride salts are completely undesirable in building industry because they cause corrosion of steel reinforcement (armature) in concrete. In addition, nitrogen gases and chlorides may be released from cementitious slurries. Problems discussed above are thus not sufficiently resolved in this document.

### Used Literature:

[1] ASTM C618 Standard Specification for Coal Fly Ash and Raw or Calcined Natural Pozzolan for Use in Concrete.
[2] D. A. Lewandowski. Design of Thermal Oxidation Systems for Volatile Organic Compounds. CRC Press, 1999, 368 p. ISBN: 978-1566704106
[3] K. Annamalai, I. K. Puri. Combustion Science and Engineering. Computational Mechanics and Applied Analysis. CRC Press, 2006, 1184 p. ISBN: 978-0849320712
[4] S. Lee, K. Park, H.-Ch. Song, H.-Ch. Shin, E. Chung, J. Park. The study on denitrification with NaOH as additive and temperature in the NOxOUt SNCR processs. In.: Zhangfa Tong, Sung Hyun Kim. Frontiers on Separation Science and Technology. World Scientific, 2004, 1064 p. ISBN: 9789814482332.
[5] H. Bernard, Z. Šimek, R. Malý. Pokročilá technologie SNCR - nové možnosti a hranice. All for Power. Praha: AF POWER agency a.s., 2012, roč. 6, č. 2. ISSN 1802-8535.
[6] R.K. Lyon. Kinetics and mechanism of thermal DeNOx: A review.
[7] R.K. Lyon. U.S. Patent 3, 900, 554, 1975.
[8] Bobrow Test Preparation Services. CliffsAP Chemistry, 4th Edition. Houghton Mifflin Harcourt, 2011, 480 p. ISBN: 978-0544178977
[9] R. W. Hemingway, J. J. Karchesy. Chemistry and Significance of Condensed Tannins. Springer Science & Business Media, 2012, 553 p. ISBN: 978-1468475111
[10] M. N. Belgacem, A. Gandini. Monomers, Polymers and Composites from Renewable Resources. Elsevier, 2011, 560 p. ISBN: 978-0080560519.
[11] J.A. Field, G. Lettinga. Biodegradation of Tannins. In.: H. Sigel, A. Sigel Metal Ions in Biological Systems: Volume 28: Degradation of Environmental Pollutants by Microorganisms and Their Metalloenzymes. Metal Ions in Biological Systems. CRC Press, 1992, 616 p. ISBN: 978-0824786397.
[12] J. Bödker. Ammonia in fly ash. Instrumentations for concrete manufacturers. Danish Technological Institute, 2006, 9p.

### Invention Principle

The drawback presented above consists in the release of ammonia residues from energy by - products during the preparation of stabilized material, concrete and other mixtures. When deposited, it is removed by the addition of tannin to prepared products (stabilized material, concrete, another mixtures).

Tannin reacts with ammonia ions present in the mixture to form insoluble ammonium salt. Consequently, ammonia does not liberate to surrounding atmosphere or to water. Ammonia fractions stay in the mixture and form there insoluble inert compounds. This method can also be applied to process water and very probably to gases as well.

Tannin is strongly polar plant polyfenol containing hydroxyl and carboxyl groups, that binds to proteins and other macromolecules. Its molecular weight ranges from 500 to 3 000 g·mol⁻¹, but also tannins having the molecular weight of 5 000 - 28 000 g·mol⁻¹ were described [9,11]. Hydrolyzed and condensed tannin can be distinguished. A considerable advangage of utilization of tannin is renewable character of that wide-spread and broadly exploited material, the extraction of which started on industrial scale as far back as in 1850 in France and north Italy [10].

The subject of the invention is the method of stabilization of ammonia residues in the mixture of one or several energy - by product(s) that contain ammonia residues with one or several components selected from cement, quick lime, lime water solution and plasticizer for building materials where tannin is added to the mixture, in the amount of 1 x 10⁻³ kg to 3 x 10² kg per 1000 kg of energy by - product(s) to form an insoluble ammonia salt.

The energy by - product can be the siliceous fly ash or fluidized ash or calcareous ash or high-temperature ash from the combustion of coal, biomass, municipal waste and other fuel mixtures or power plant gypsum.

Inorganic filler, such as sand, can be added to the mixture of inorganic or organic substance or their mixture with energy by - product or to the mixture of energy by - products and tannin.

The subject of the invention is also the application of mixture containing stabilized ammonia residues in accordance with the invention in building industry and for the production of building materials.

The advantage of application of tannin lays also in non - affecting the setting and hardening process. It does not destabilize heavy metals in the cement stone (by contrast it has positive effect) moreover, its anticorrosive effect on reinforcing materials can be expected, which however, due to low concentration of that substance, will be just negligible.

The reason, that the addition of this substance does not negatively affect the course of hydration can be constituted on the fact, that sulphonated tannin extract behaves in the mixture as superplasticizer. The introduction of sulpho-group inreases the solubility of tannin. The stabilization of molecular weight can be achieved by the addition of urea [10]. The effective dosage of tannin depends on anaytically detrmined concentration of ammonia in fly ash and on the purity of used tannin. The mixture prepared according to the invention has increased utility value; Its usage lowers the environmental burden and reduces the risk of exposition at work. The interior climate in the buildings made of such materials will be markedly improved.

The invention is further explained using the examples of invention realisation, which in no way brings any limitations to other possible solutions within the patent claims.

### Examples of Invention Realisation

### Example No 1: The method of production of mixture consisting of Portland cement, plasticiser, fluidized ash containing ammonia residues stabilized by tannin and of normalized sand

30 g of tannin were added to the mixture prepared in accordance with CSN EN 196-1, containing 450 g of portland cement (CEM I 42,5 R), 4,5 g of plasticizer, 150 g of high-temperature fly ash, 1350 g of normalized sand (1:1:1; coarse: medium:fine) and 225 g of water. The measurement of gas above the concrete (IR equipped with flow KBr cell) did not detect ammonia compared to untreated reference mixture. Moreover, treated sample did not exhibit the ammonia odour compared to concrete which did not contain tannin.

### Example No 2: The method of production of suspension from lime water solution and classic fly ash containing ammonia residues stabilized by tannin

Tannin in the amount of 0,002 kg was added to classic (siliceous) fly ash in the amount of 100 kg. Next, filtered water suspension of calcium oxide (lime water solution) in the amount of 200 kg was added to the mixture. The measurement of gas composition above the mixture (IR equipped with flow KBr cell) revealed significantly lower amount of released ammonia, compared to untreated secondary raw material.

### Example No 3: The method of production of mixture from lime slurry, fluidized ash containing ammonia residues stabilized by tannin and from normalized sand

The mixture of fluidized ash in the amount of 250 kg and tannin in the amount of 60 kg was mixed with lime slurry (water : lime 1 : 1) in the amount of 75 kg and with normalized sand in the amount of 2,6 kg (1:1:1; coarse : medium : fine). The measurement of gas composition above the concrete (IR equipped with flow KBr cell) revealed significantly lower amount of released ammonia compared to untreated secondary raw material.

### Example No 4: The method ofproduction of the mixture from qiuck lime with water, high - temperature fly ash and power plant gypsum containing ammonia residues stabilized by tannin

High - temperature fly ahs in the amount of 200 kg was mixed with 48 kg of quick lime with water, 10 kg of power plant gypsum and tannin in the amount of 5 kg. Next the mixture was mixed with moisty bulk material (stabilized material). The measurement of gas composition above the concrete (IR equipped with flow KBr cell) revealed almost zero amount of ammonia compared to untreated secondary raw material.

### Industrial Applicability

The subject of the invention eliminates the limitations arising from the presence of ammonia residues in secondary raw materials (fly ash, power plant gypsum, industrial water, etc.) and their release, which leads to increased utility value of those by - products. Another indispensable, and for some products the main aspect is the elimination of environmental burden and risks of workers'exposition. The mixtures containing energy by - products prepared with tannin according to the invention are applicable in energetics and building industry. They are mainly used for the preparation of stabilized material, for industrial water treatment, for the preparation of binders, mortars and concretes applying secondary raw materials. They are also used in the preparation of sanitation coatings for interiors, which had already been built from materials containing the by - products with ammonia residues.

## Claims

1. The method of stabilization of ammonia residues in the mixture of one or several energy by- product(s) that contain ammonia residues with one or several components selected from cement, quick lime, lime water solution and plasticizer for building materials **characterized by** the addition of tannin to the mixture, where the amount of tannin is 1 x 10⁻³ kg to 3 x 10² kg per 1000 kg of energy by - product(s) to form an insoluble salt.

2. The method of stabilization of ammonia residues in the mixture containing energy by - products according to claim 1 **characterized by** the energy by - product being siliceous ash or fluidized ash or calcareous ash or high-temperature ash from coal combustion or power plant gypsum.

3. The method of stabilization of ammonia residues in the mixture containing energy by - products according to claim 1 to 2 **characterized by** further addition of an inorganic filler to the mixture.

4. The use of the mixture containing stabilized ammonia residues according to claims 1 to 3 in building industry and in the production of building materials.

## Patentansprüche

1. Das Verfahren zur Stabilisierung von Ammoniakrückständen in der Mischung aus einem oder mehreren Energie-Nebenprodukten, die Ammoniakrückstände mit einer oder mehreren Komponenten enthalten, ausgewählt aus Zement, Schnellkalk, Kalkwasserlösung und Weichmacher für Baustoffe, **gekennzeichnet durch** die Zugabe von Tannin zu der Mischung, wobei die Menge an Tannin 1 x 10⁻³ kg bis 3 x 10² kg pro 1000 kg Energie-Nebenprodukt (e) beträgt, um ein unlösliches Salz zu bilden.

2. Das Verfahren zur Stabilisierung von Ammoniakrückständen in der, Energie-Nebenprodukte enthaltenden Mischung nach Anspruch 1, **gekennzeichnet dadurch, dass** als Energie-Nebenprodukt Kieselsasche oder fluidisierte Asche oder Kalkasche oder Hochtemperaturasche aus Kohleverbrennung oder Kraftwerksgips entstehen.

3. Das Verfahren zur Stabilisierung von Ammoniakrückständen in der, Energie-Nebenprodukte enthaltenden Mischung nach Anspruch 1 bis 2, **gekennzeichnet durch** weitere Zugabe eines anorganischen Füllstoffs zur Mischung.

4. Die Verwendung der, stabilisierte Ammoniakrückstände enthaltenden Mischung nach den Ansprüchen 1 bis 3 in der Bauindustrie und bei der Herstellung von Baustoffen.

## Revendications

1. La méthode de stabilisation des résidus d'ammoniaque dans le mélange d'un ou de plusieurs sous-produit(s) énergétique(s) qui contien(nen)t des résidus d'ammoniaque avec un ou plusieurs composants choisis entre le ciment, la chaux-vive, une solution d'eau de chaux et du plastifiant pour matériaux de construction **caractérisée par** l'ajout de tanin au mélange, où la quantité de tanin est de 1 x 10⁻³ kg à 3 x 10² kg par 1000 kg de sous-produit(s) énergétique(s) pour former un sel insoluble.

2. La méthode de stabilisation des résidus d'ammoniaque dans le mélange contenant des sous-produits énergétiques selon la revendication 1 **caractérisée par** les sous-produits énergétiques étant de la cendre siliceuse ou de la cendre fluidisée ou de la cendre calcaire ou de la cendre à haute température provenant de la combustion de charbon ou du gypse de centrale électrique.

3. La méthode de stabilisation des résidus d'ammoniaque dans le mélange contenant des sous-produits énergétiques selon la revendication 1 à 2 **caractérisée par** un ajout supplémentaire d'une charge inorganique au mélange.

4. L'utilisation du mélange contenant des résidus d'ammoniaque stabilisés selon les revendications 1 à 3 dans l'industrie du bâtiment et dans la production de matériaux de construction.
